# EUROPEAN PATENT APPLICATION

(11) **EP 4 597 063 A1**
(43) Date of publication of application: **06.08.2025**
(21) Application number: 24154755.3
(22) Date of filing: 30.01.2024
(51) Int. Cl.: G01M 3/28, G06N 3/0455

(54) **SYSTEM AND METHOD FOR DETECTING LEAKAGES IN A FLUID-BEARING STRUCTURE**

(71) Applicant: Grohe AG, 58675 Hemer (DE)
(72) Inventor: Ramos, Tiago, 01-234 Warsaw (PL); Karol, Adnan, 33100 Paderborn (DE); Amah, Diane, 1056GT Amsterdam (NL)

(57) **Abstract**

This invention relates to a system for detecting leakages in a fluid-bearing structure, the system comprising at least a local arrangement arranged at a fluid-bearing structure and comprising at least a valve for closing a fluid line of the fluid-bearing structure to create a hydrostatic subnetwork within the fluid-bearing structure, a pressure sensor (2) for measuring the fluid pressure in the hydrostatic subnetwork, a processing unit (3), an operating unit (10), whereby the processing unit (3) is adapted to direct the valve to close itself, to direct the pressure sensor (2) to measure the fluid pressure, to transmit a measured designated value to the operating unit (10), to direct the valve to open itself, whereby the operating unit (10) is adapted to receive a measured designated value from the processing unit (3), to command the processing unit (3) to direct, to determine a leakage likelihood and a measurement duration associated with the arranged fluid-bearing structure based on a calculated fluid pressure difference, to build a multi-dimensional latent space model based on multiple pressure differences between the measured fluid pressure and a predefined reference fluid pressure and based on the corresponding measurement duration of each pressure difference, to apply a clustering method to the built latent space in order to define at least two clusters, whereby the clusters represent different confidence levels regarding the detection of a leakage, to transform consecutive pressure measurements into a multi-dimensional data representation representing an individual fluid-bearing structure, to determine to which cluster the transformed multi-dimensional data representation belongs in order to yield the leakage confidence level of the corresponding fluid-bearing structure.

## Description

This invention relates to a system, a method and a computer program, respectively, for detecting leakages in a fluid-bearing structure, i.e. water bearing structure or gas bearing structure. Within the context of this invention fluid is water or gas. Within the context of this invention leakages are fluid leakages, especially water leakages or gas leakages.

One of the most frequent threats to a house are water leakage events like water pipe bursts or other sorts of leakages of water bearing structures, such as faucets, showers, valves or pipes. These events can lead to severe water damages to the house. Typically, water damages are expensive to repair, because the escaped water not only affects the furnishings and the interior of the house but also the structure of the house itself, e. g. by corrosion. Moreover, the escaped water can lead to mold, i.e. fungus, due to constant moisture or dampness over a significant period of time. Mold potentially causes major damages to the house as it may require specialized cleaning methods and materials applied to the affected sites. This can be time-consuming and expensive. Furthermore, mold can cause health issues to people such as allergies or breathing problems. In general, the earlier the events causing the water damages are detected the more damages to the house and to people can potentially be prevented.

Therefore, it is crucial to detect the events causing the water damages as early as possible. In the event of a water pipe burst a vast amount of water suddenly escapes the pipe. This kind of event is relatively easy to spot. Once the water pipe burst is detected appropriate countermeasures addressing the detected water pipe burst can be taken in order to prevent more severe water damages.

A leaking water bearing structure, e. g. a leaking water pipe, is more difficult to detect as the amount of water escaping the pipe is significantly smaller as compared to a water pipe burst, especially at the early stage. Micro-leakages can be defined as a specific form of leakages. Micro-leakages are small leakages, e. g. at a rate of 2 ml of water per second (ml/s), i.e. 2 water drops every second, or lower. Micro-leakages are difficult to spot by the house owner or apartment owner as the leaking amount of water is small.

In addition, leakages and micro-leakages are hard to spot as the leaking water bearing structures oftentimes are concealed behind or in a wall or a cladding element. Known systems and methods, respectively, for detecting a leaking water pipe are time-consuming and expensive. It is also desirable to detect leaking water pipes as reliable as possible because false positive results may lead to a mistrust towards the system or the method, respectively, itself.

Therefore, the objective of the present invention is to provide a solution to the mentioned shortcomings of the known systems and methods, respectively, and in particular to provide a system and method, respectively, for detecting leaking water-bearing structures as early and reliable as possible in a fast and inexpensive way.

The present invention is directed to a system, a method and computer program, respectively, for detecting leakages in a fluid-bearing structure according to claim 1, claim 7 and claim 12, respectively. Embodiments of the present invention arise from the corresponding dependent claims.

The inventive system serves for detecting leakages in a fluid-bearing structure, e.g. in a network of pipes. This system can be used in two ways. First, it can be used for building a detector, e.g. the detector comprising filters, for detecting leakages in a fluid-bearing structure. Second, it can be used for applying the built detector in order to detect leakages in a fluid-bearing structure. This system comprises at least a local arrangement. Especially, this system comprises at least multiple, i.e. two or more, local arrangements when building the detector. Especially, this system comprises at least one, e.g. exactly one, local arrangement when applying the built detector. The local arrangement is arranged, i.e. located, at an individual fluid-bearing structure.

The local arrangement comprises at least a valve for closing a fluid line of the fluid-bearing structure to create a hydrostatic subnetwork within the fluid-bearing structure, a pressure sensor for measuring the fluid pressure in the hydrostatic subnetwork and a processing unit. The processing unit can be microcontroller. This system also comprises at least an operating unit, especially a cloud-based operating unit. The operating unit can be a server unit that is connected to the in-ternet and/or a local database unit. The local arrangement and the operating unit constitute the inventive system's minimum hardware setup.

The processing unit is adapted to direct the valve to close itself, i.e. to direct the valve to be closed. This is the case when a measurement is about to begin or when a significant leakage is detected. The processing unit is adapted to direct the pressure sensor to measure the fluid pressure. The processing unit can be adapted to direct another sensor to measure its designated value, e.g. to direct a temperature sensor to measure the fluid temperature or to direct a flow rate sensor to measure the fluid flow rate. The processing unit is also adapted to transmit a measured designated value to the operating unit, e.g. to transmit a measured fluid pressure, fluid temperature or fluid flow rate to the operating unit. The processing unit is also adapted to direct the valve to open itself, i.e. to direct the valve to be opened.

The operating unit is adapted to receive a measured designated value, i.e. a fluid pressure value, a fluid temperature value or a fluid flow rate value, respectively, from the processing unit and to command the processing unit to direct, e.g. to direct a pressure sensor to measure the fluid pressure, to direct a temperature sensor to measure the fluid temperature, to direct a flow rate sensor to measure the fluid flow rate, to direct a valve to close itself or to direct a valve to open itself.

The operating unit is adapted to determine a leakage likelihood and a measurement duration associated with the arranged fluid-bearing structure based on a calculated fluid pressure difference. The leakage likelihood associated with the arranged fluid-bearing structure represents the probability of a fluid leakage in that arranged fluid-bearing structure. The lower the leakage likelihood is the lower the probability of a leakage is. The higher the leakage likelihood is the higher the probability of a leakage is. The leakage likelihood can be a non-negative integer in the range from 0 to 8. The measurement duration is a period of time during which a measurement, e.g. a pressure measurement, is conducted. In case of a pressure measurement the valve is closed in order to create a hydrostatic subnetwork within the fluid-bearing structure and is opened again after the expiration of the measurement duration.

The operating unit is adapted to build a multi-dimensional latent space model based on multiple, i.e. two or more, pressure differences between the measured fluid pressure measured by the pressure sensor and a predefined reference fluid pressure and based on the corresponding measurement duration of each pressure difference. The multi-dimensional latent space model can be based on multiple, i.e. two or more, slopes. A slope is a quotient that equals to the calculated fluid pressure difference divided by the determined measurement duration of each pressure difference. The predefined reference fluid pressure can be initially set to a specific value at the beginning of each measurement, i.e. it is the initial fluid pressure at the time of measurement. The operating unit is also adapted to apply a classification method, especially a clustering method, e.g. k-means algorithm, to the built latent space in order to define at least two labels, especially at least two clusters, whereby the labels or clusters represent different confidence levels regarding the detection of a leakage. In case of two labels or clusters a first label or cluster holds measurements standing for a low probability of leakage and a second label or cluster holds measurements standing for a high probability of leakage. In case of three labels or clusters a first label or cluster holds measurements standing for a low probability of leakage, a second label or cluster holds measurements standing for a medium probability of leakage and a third label or cluster holds measurements standing for a high probability of leakage. In case of four labels or clusters a first label or cluster holds measurements standing for a low probability of leakage, a second label or cluster holds measurements standing for a medium-low probability of leakage, a third label or cluster holds measurements standing for a medium-high probability of leakage and a fourth label or cluster holds measurements standing for a high probability of leakage. These schemes are applied analogously for cases of five or more label or clusters. The number of labels or clusters can be determined using the elbow method. These functionalities of the operating unit serve for building a second filter. The system can comprise multiple local arrangements for building the second filter. The second filter can be a method using unsupervised and supervised learning.

Moreover, the operating unit is adapted to transform consecutive pressure measurements into a multi-dimensional data representation of an individual fluid-bearing structure. The operating unit is also adapted to determine to which label or cluster the created multi-dimensional data representation belongs in order to yield the leakage confidence level of the corresponding fluid-bearing structure. These functionalities of the operating unit serve for applying the second filter.

In one embodiment of the inventive system the pressure sensor can be adapted to measure the fluid pressure, i.e. to get a fluid pressure measurement, periodically, i.e. repetitively.

The operating unit can be adapted to determine the leakage likelihood and the measurement duration associated with the arranged fluid-bearing structure based on a calculated fluid pressure difference by being adapted to check whether the pressure measurement is valid or invalid, e.g. by examining the overall behavior of the pressure measurements over time, especially ruling out sinusoidal behavior of the pressure measurements or interruptions of the pressure measurements. This validity check is performed prior to the determination of the leakage likelihood. The initial measurement duration can be set prior to the measurement.

The operating unit can be adapted to calculate the difference in fluid pressure between the beginning and the end of the measurement duration if the pressure measurement is checked as valid, i.e. the check of the pressure measurement yielded a positive result. The operating unit can be adapted to assign a higher value for the leakage likelihood as compared to the previous value for the leakage likelihood and to decrease the measurement duration for the next measurement as compared to the previous measurement duration if the calculated fluid pressure difference is greater than a threshold value. The operating unit can be adapted to assign a lower value for the leakage likelihood as compared to the previous value for the leakage likelihood and to increase the measurement duration for the next measurement as compared to the previous measurement duration if the calculated fluid pressure difference is less than or equal to the threshold value.

The scheme for the determination of the leakage likelihood and the measurement duration can be as follows.

The fluid pressure is initially set to 3 bar. This value is considered to be the fluid pressure reference. The leakage likelihood is initially set to 0. This value is considered to be the formerly determined leakage likelihood.

If the formerly determined leakage likelihood equals 0, then determine the measurement duration to be 15 minutes, set the number of daily measurements to 1, start the measurement procedure once a day when the plausibility of fluid consumption within the fluid-bearing structure is minimal, e.g. at 3:00 a.m., when people usually sleep, at by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 0, i.e. no change of the leakage likelihood. If the fluid pressure difference is greater than 10 % and less than or equal to 50 % of the fluid pressure reference, then determine the leakage likelihood to be 1, i.e. increase of the leakage likelihood by 1. If the fluid pressure difference is greater than 50 % of the fluid pressure reference, then determine the leakage likelihood to be 2, i.e. increase of the leakage likelihood by 2.

If the formerly determined leakage likelihood equals 1, then determine the measurement duration to be 15 minutes, set the number of daily measurements to 2, start the measurement procedure twice a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 0, i.e. decrease of the leakage likelihood by 1. If the fluid pressure difference is greater than 10% and less than or equal to 50 % of the fluid pressure reference, then determine the leakage likelihood to be 1, i.e. no change of the leakage likelihood. If the fluid pressure difference is greater than 50 % of the fluid pressure reference, then determine the leakage likelihood to be 2, i.e. increase of the leakage likelihood by 1.

If the formerly determined leakage likelihood equals 2, then determine the measurement duration to be 10 minutes, set the number of daily measurements to 3, start the measurement procedure 3 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 1, i.e. decrease of the leakage likelihood by 1. If the fluid pressure difference is greater than 10% and less than or equal to 50 % of the fluid pressure reference, then determine the leakage likelihood to be 3, i.e. increase of the leakage likelihood by 1. If the fluid pressure difference is greater than 50 % of the fluid pressure reference, then determine the leakage likelihood to be 4, i.e. increase of the leakage likelihood by 2.

If the formerly determined leakage likelihood equals 3, then determine the measurement duration to be 10 minutes, set the number of daily measurements to 3, start the measurement procedure 3 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 1, i.e. decrease of the leakage likelihood by 2. If the fluid pressure difference is greater than 10% and less than or equal to 50 % of the fluid pressure reference, then determine the leakage likelihood to be 3, i.e. no change of the leakage likelihood. If the fluid pressure difference is greater than 50 % of the fluid pressure reference, then determine the leakage likelihood to be 4, i.e. increase of the leakage likelihood by 1.

If the formerly determined leakage likelihood equals 4, then determine the measurement duration to be 5 minutes, set the number of daily measurements to 4, start the measurement procedure 4 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 3, i.e. decrease of the leakage likelihood by 1. If the fluid pressure difference is greater than 10% and less than or equal to 50 % of the fluid pressure reference, then determine the leakage likelihood to be 5, i.e. increase of the leakage likelihood by 1. If the fluid pressure difference is greater than 50 % of the fluid pressure reference, then determine the leakage likelihood to be 6, i.e. increase of the leakage likelihood by 2.

If the formerly determined leakage likelihood equals 5, then determine the measurement duration to be 5 minutes, set the number of daily measurements to 6, start the measurement procedure 6 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 3, i.e. decrease of the leakage likelihood by 2. If the fluid pressure difference is greater than 10% and less than or equal to 50 % of the fluid pressure reference, then determine the leakage likelihood to be 5, i.e. no change of the leakage likelihood. If the fluid pressure difference is greater than 50 % of the fluid pressure reference, then determine the leakage likelihood to be 6, i.e. increase of the leakage likelihood by 1.

If the formerly determined leakage likelihood equals 6, then determine the measurement duration to be 2 minutes, set the number of daily measurements to 8, start the measurement procedure 8 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 5, i.e. decrease of the leakage likelihood by 1. If the fluid pressure difference is greater than 10% and less than or equal to 50 % of the fluid pressure reference, then determine the leakage likelihood to be 7, i.e. increase of the leakage likelihood by 1. If the fluid pressure difference is greater than 50 % of the fluid pressure reference, then determine the leakage likelihood to be 8, i.e. increase of the leakage likelihood by 2.

If the formerly determined leakage likelihood equals 7, then determine the measurement duration to be 1 minute, set the number of daily measurements to 10, start the measurement procedure 10 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is greater than or equal to 0 % and less than or equal to 10 % of the fluid pressure reference, then determine the leakage likelihood to be 5, i.e. decrease of the leakage likelihood by 2. If the fluid pressure difference is greater than 10% and less than or equal to 50 % of the fluid pressure reference, then determine the leakage likelihood to be 7, i.e. no change of the leakage likelihood. If the fluid pressure difference is greater than 50 % of the fluid pressure reference, then determine the leakage likelihood to be 8, i.e. increase of the leakage likelihood by 1.

If the formerly determined leakage likelihood equals 8, then determine the measurement duration to be 1 minute, set the number of daily measurements to 12, start the measurement procedure 12 times a day when the plausibility of fluid consumption within the fluid-bearing structure is minimal, by constantly measuring the fluid pressure every two seconds during the entire measurement duration and after the measurement duration calculating the fluid pressure difference between the very first measured fluid pressure and the very last measured fluid pressure.

If the fluid pressure difference is 0 % of the fluid pressure reference, i.e. if there is no pressure drop at all, then determine the leakage likelihood to be 7, i.e. decrease of the leakage likelihood by 1. If the fluid pressure difference is greater than 0 % of the fluid pressure reference, i.e. if there is any pressure drop, then determine the leakage likelihood to be 8, i.e. no change of the leakage likelihood.

In addition the scheme for the determination of the leakage likelihood and the measurement duration can comprise the following.

In each case, if the formerly determined leakage likelihood equals a number from 0 to 8, then, measure the fluid flow rate, whereby if the fluid pressure difference is, for example, greater than 75 % of the fluid pressure reference, then stop the fluid pressure measurement, whereby if the fluid flow rate is greater than or equal to a flow rate significance level, then label the event of fluid pressure difference greater than 75 % of the fluid pressure reference as intentional fluid usage, else label this event as potential fluid leakage with its corresponding leakage likelihood.

In another embodiment of the inventive system the local arrangement additionally can comprise at least a temperature sensor for measuring the fluid temperature and a flow rate sensor for measuring the fluid flow rate.

In another embodiment of the inventive system the temperature sensor can be adapted to measure the fluid temperature, i.e. to get a fluid temperature measurement, periodically, i.e. repetitively. The temperature sensor can be adapted to measure the fluid temperature directly or indirectly. An indirect measurement of the fluid temperature can include the measurement of the temperature of the fluid-bearing structure itself or the measurement of the temperature near the fluid-bearing structure. Also, the flow rate sensor can be adapted to measure the fluid flow rate, i.e. to get a fluid flow rate measurement, periodically, i.e. repetitively.

The processing unit can be adapted to calculate the fluid pressure difference between the measured fluid pressure and a predefined reference fluid pressure, e.g. the fluid pressure in the hydrostatic subnetwork of the fluid-bearing structure at the beginning of the measurement. The processing unit can be adapted to set a binary status variable, e.g. a variable with a positive or negative value, indicative of a possible fluid leakage based on a comparison of the calculated fluid pressure difference, i.e. pressure drop, and a predefined reference fluid pressure difference. The predefined reference fluid pressure and/or the predefined reference fluid pressure difference can be a value between 0.1 bar and 1.0 bar, preferably between 0.2 bar and 0.8 bar, more preferably 0.5 bar.

The operating unit can be adapted to generate a first, a second and a third normalized anomaly score based on fluid pressure measurements, fluid temperature measurements and fluid flow rate measurements. The operating unit can be adapted to calculate a weighted averaged anomaly score based on the first, the second and the third normalized anomaly score. The operating unit can be adapted to build a threshold model based on the weighted averaged anomaly score. These functionalities of the operating unit serve for building a first filter. The system can comprise multiple local arrangements for building the first filter. The first filter can be an unsupervised learning method.

Moreover, the operating unit can be adapted to apply the calculated weighted averaged anomaly score of an individual local arrangement to the built threshold model. The built threshold model can either yield a result standing for the individual local arrangement having a low leakage probability or yield a result standing for the individual local arrangement having a high leakage probability. The operating unit can also be adapted to label local arrangements as "local arrangement with low leakage probability" or "local arrangement with high leakage probability" based on the result of the application of the calculated weighted averaged anomaly score to the built threshold model. These functionalities of the operating unit serve for building the second filter.

In another embodiment of the inventive system the operating unit can be adapted to generate the first, the second and the third normalized anomaly score based on fluid pressure measurements, fluid temperature measurements and fluid flow rate measurements by being adapted to the following functionalities: To calculate an average value of a predefined number of fluid pressure measurements, an average value of a predefined number of fluid temperature measurements and an average value of a predefined number of fluid flow rate measurements; to count the number of binary status variables indicating a possible fluid leakage, e.g. indicated by positive values; to generate a first time series based on the averaged fluid pressure measurements, a second time series based on the averaged fluid temperature measurements, a third time series based on the averaged fluid flow rate measurements and a fourth time series based on the counted number of binary status variables indicating a possible fluid leakage; to extract a predefined number of statistical features of each of the first, the second, the third and the fourth time series; to apply the extracted statistical features to a first anomaly detection model in order to yield a first anomaly score, to a second anomaly detection model in order to yield a second anomaly score and to a third anomaly detection model in order to yield a third anomaly score; to normalize the first, the second and the third yielded anomaly score; to send the first, the second and the third normalized anomaly score to the operating unit.

The predefined number of statistical features being extracted of each of the first, the second, the third and the fourth time series can be 22. This ensures a relatively strong classification performance across a given collection of time series problems and is relatively little redundant. The extraction of 22 statistical features can be performed by an algorithm called Catch 22. If so, the total number of extracted statistical features is 88. The statistical features extracted from the time series constitute a feature-based representation of the corresponding time series.

The first anomaly detection model can be an algorithm named Isolation Forest. The anomaly score yielded by the Isolation Forest algorithm, typically ranging from -0.5 to +0.5, can be normalized onto a range from 0 to +1. The second anomaly detection model can be an algorithm named One-class Support Vector Machine (One-class SVM). The anomaly score yielded by the One-class SVM algorithm, typically ranging from -1 to +1, can be normalized onto a range from 0 to +1. The third anomaly detection model can be an algorithm named Hierarchical Density-based Spatial Clustering of Applications with Noise (HDBSCAN). The anomaly score yielded by the HDBSCAN algorithm can be normalized onto a range from 0 to +1.

In another embodiment of the inventive system the operating unit can be adapted to build the threshold model based on the weighted averaged anomaly score by being adapted to generate a first, a second and a third probability distribution based on the received first, second and third normalized anomaly scores; to calculate a weighted averaged probability distribution based on the first, the second and the third probability distribution; to calculate an anomaly score threshold based on the weighted averaged probability distribution. The anomaly score threshold can be the argument of a value between 80 % and 99 %, preferably between 90 % and 97 %, more preferably 95 %, of the weighted averaged probability distribution.

The inventive method serves for detecting leakages in a fluid-bearing structure, e.g. in a network of pipes.

This method uses a system comprising at least a local arrangement arranged at a fluid-bearing structure and comprising at least a valve for closing and opening a fluid line of the fluid-bearing structure to create a hydrostatic subnetwork within the fluid-bearing structure, a pressure sensor for measuring the fluid pressure in the hydrostatic subnetwork and a processing unit. The system further comprises at least an operating unit.

This method comprises at least the following steps: Selecting a first group of local arrangements, e.g. by picking every local arrangement that is available, i.e. a whole population of local arrangements, or by selecting local arrangements by chance, i.e. randomly, by defining and assessing a criterion or by manual screening; building a first filter by building a threshold model based on statistical features collected from local arrangements of the selected first group of local arrangements; selecting a second group of local arrangements, e.g. by chance, i.e. randomly, by defining and assessing a criterion or by manual screening, whereby the second group of local arrangements can be consist of completely different local arrangements as compared to those of the first group of local arrangements, can be a subgroup of the first group of local arrangements or can be identical to the first group of local arrangements; applying the built first filter to the selected second group of local arrangements yielding a third group of local arrangements that is a subgroup, i.e. a subset, of the second group of local arrangements; building a second filter by building a multi-dimensional latent space model based on multiple pressure differences collected from the third group of local arrangements; selecting a fourth group of local arrangements, e.g. by chance, i.e. randomly, by defining and assessing a criterion or by manual screening, whereby the fourth group of local arrangements can be consist of completely different local arrangements as compared to those of the third group of local arrangements, can be a subgroup of the third group of local arrangements or can be identical to the third group of local arrangements; applying the built second filter to the selected fourth group of local arrangements yielding a fifth group of local arrangements that is a subgroup, i.e. a subset, of the fourth group of local arrangements. The inventive method can use the inventive system.

The aforementioned steps can be performed by the operating unit. Within the context of this invention groups consist of two or more entities.

The first group of local arrangements serves the purpose of building the first filter. The second group of local arrangements can be completely or partly identical to the first group of local arrangements. The third group of local arrangements is the result of applying the first filter to the second group of local arrangements.

In one embodiment of the inventive method the step of building a first filter by building a threshold model based on statistical features collected from local arrangements of a first group of local arrangements comprises at least the following substeps: collecting sensor data, e.g. fluid pressure, fluid temperature and fluid flow rate as well as status data, e.g. binary status indicative of a possible fluid leakage, from each local arrangement of the first group of local arrangements, whereby the collected sensor data is indicative of the condition of the fluid-bearing structures at which the local arrangements of the first group of local arrangements are arranged. In order to collect the sensor data the valve of each of the local arrangements of the first group of local arrangements can be closed in order to create a hydrostatic subnetwork within the individual fluid-bearing structure at which each of the local arrangements of the first group of local arrangements is arranged and after the measurement the valve is opened again. Alternatively, the sensor data can be collected while the valve of each of the local arrangements of the first group of local arrangements is opened. The sensor data can be collected every 15 minutes; generate time series based on the collected data, i.e. sensor data as well as status data, of the local arrangements of the first group of local arrangements, e.g. fluid pressure time series, fluid temperature time series and fluid flow rate time series as well as status time series, e.g. time series regarding binary status indicative of a possible fluid leakage, constituting the time series of the first group of local arrangements; extracting statistical features from the time series of the first group of local arrangements, e.g. extracting 22 statistical features from each of the time series of the first group of local arrangements; applying the extracted statistical features of the first group of local arrangements to multiple, i.e. two or more, e.g. three, anomaly detection models, e.g. Isolation Forest, One-class SVM and/or HDBSCAN, yielding multiple anomaly scores for each of the local arrangements of the first group of local arrangements; calculating a weighted averaged probability distribution based on the multiple anomaly scores; building a threshold model with an anomaly score threshold, whereby the anomaly score threshold is defined based on the calculated weighted averaged probability distribution.

The statistical features extracted from the time series constitute a feature-based representation of the corresponding time series. The statistical features can be scalar values. The statistical features can be based on specific distributions, based on temporal statistics, based on linear autocorrelation, based on nonlinear autocorrelation and/or based on fluctuation analysis.

Time series can be generated based on sensor data and status data that is coherent. This way, the sensor data of fluid pressure that was measured by the local arrangement's pressure sensor can be converted into a fluid pressure time series associated with that local arrangement. The sensor data of fluid temperature that was measured by the local arrangement's temperature sensor can be converted into a fluid temperature time series associated with that local arrangement. The sensor data of fluid flow rate that was measured by the local arrangement's flow rate sensor can be converted into a fluid flow rate time series associated with that local arrangement. The status data can be converted into a status time series associated with that local arrangement. This leads to four distinct time series. In case 22 statistical features get extracted from each time series, this yields 88 extracted statistical features.

The weighted averaged probability distribution can be calculated based on a first, second and third probability distribution each based on the yielded anomaly scores. The anomaly score threshold can be calculated based on the weighted averaged probability distribution. The anomaly score threshold can be the argument of a value between 80 % and 99 %, preferably between 90 % and 97 %, more preferably 95 %, of the weighted averaged probability distribution.

In another embodiment of the inventive method the step of applying the first filter to each of the local arrangements of a second group of local arrangements yielding a third group of local arrangements that is a subgroup of the second group of local arrangements comprises at least the following substeps: closing the valve of each of the local arrangements of the second group of local arrangements in order to create a hydrostatic subnetwork within the individual fluid-bearing structure at which each of the local arrangement of the second group of local arrangements is arranged. In order to collect the sensor data the valve of each of the local arrangements of the second group of local arrangements can be closed in order to create a hydrostatic subnetwork within the individual fluid-bearing structure at which each of the local arrangements of the second group of local arrangements is arranged and after the measurement the valve is opened again. Alternatively, the sensor data can be collected while the valve of each of the local arrangements of the second group of local arrangements is opened; collecting sensor data, e.g. fluid pressure, fluid temperature and fluid flow rate as well as status data, e.g. binary status indicative of a possible fluid leakage, from each local arrangement of the second group of local arrangements indicative of the condition of the fluid-bearing structures at which the local arrangement of the second group of local arrangements are arranged; generate time series based on the collected data, i.e. sensor data as well as status data, of the local arrangement of the second group of local arrangements, e.g. fluid pressure time series, fluid temperature time series, fluid flow rate time series and status time series, e.g. time series regarding binary status indicative of possible fluid leakage, constituting the time series of the second group of local arrangements time series; extracting statistical features from the time series of the second group of local arrangements, especially extracting 22 statistical features from each of the time series; applying the extracted statistical features of the second group of local arrangements to multiple anomaly detection models yielding multiple anomaly scores for each of the local arrangements of the second group of local arrangements; calculating a weighted anomaly score for each of the local arrangements of the second group of local arrangements based on the multiple anomaly scores; applying the calculated weighted anomaly score of each of the local arrangements of the second group of local arrangements to the built threshold model, whereby the local arrangements of the second group of local arrangements associated with a weighted anomaly score greater than or equal to the anomaly score threshold constitute the third group of local arrangements.

In another embodiment of the inventive method the step of building a second filter by building a multi-dimensional latent space model based on multiple pressure differences collected from local arrangements of the third group of local arrangements comprises at least the following substeps: closing the valve of each of the local arrangements of the third group of local arrangements in order to create a hydrostatic subnetwork within the fluid-bearing structure at which each of the local arrangement of the third group of local arrangements is arranged. In order to measure the fluid pressure the valve of each of the local arrangements of the third group of local arrangements is closed in order to create a hydrostatic subnetwork within the fluid-bearing structure at which each of the local arrangement of the third group of local arrangements is arranged. After the pressure measurement the valve is opened again; the system's operating unit instructing the pressure sensor of the local arrangement to measure the fluid pressure in its associated hydrostatic subnetwork for as long as the determined measurement duration; calculating the fluid pressure difference between the currently measured fluid pressure and a formerly measured fluid pressure during a previously determined measurement duration in the hydrostatic subnetwork of each of the local arrangements of the third group of local arrangements; creating a multi-dimensional, e.g. 8-dimensional, 10-dimensional or 12-dimensional, especially 10-dimensional, latent space, based on multiple, e.g. 8, 10 or 12, especially 10, calculated fluid pressure differences and calculated slopes, i.e. quotients that equal to the calculated fluid pressure differences divided by the determined measurement durations. The latent space comprises a number of data representations, whereby each data representation comprises multiple, e.g. 8, 10 or 12, especially 10, of the calculated fluid pressure differences and the calculated slopes; defining multiple, e.g. 2, 3, 4, 5, 6 or 7, especially 5, clusters of the local arrangements of the third group of local arrangements; defining a classification model based on the multiple, e.g. 2, 3, 4, 5, 6 or 7, especially 5, clusters and the multi-dimensional, e.g. a 8-dimensional, 10-dimensional or 12-dimensional, especially 10-dimensional, latent space. The clusters represent different confidence levels regarding the detection of a leakage. The number of clusters can be determined using the elbow method or by means of the silhouette coefficient or by expert knowledge.

In another embodiment of the inventive method the step of applying the second filter to an individual local arrangement yielding a leakage confidence score comprises at least the following substeps: closing the valve of each of the local arrangements of the fourth group of local arrangements in order to create a hydrostatic subnetwork within the fluid-bearing structure at which each of the local arrangement of the fourth group of local arrangements is arranged. In order to measure the fluid pressure the valve of each of the local arrangements of the fourth group of local arrangements is closed in order to create a hydrostatic subnetwork within the fluid-bearing structure at which each of the local arrangement of the fourth group of local arrangements is arranged. After the pressure measurement the valve is opened again; the system's operating unit instructing the pressure sensor of the local arrangement to measure the fluid pressure in its associated hydrostatic subnetwork for as long as the determined measurement duration; calculating the fluid pressure difference between the measured fluid pressure and a formerly measured fluid pressure in the hydrostatic subnetwork of each of the local arrangements of the third group of local arrangements; transforming multiple, e.g. 8, 10 or 12, especially 10, of the calculated fluid pressure differences and the calculated slopes into a multi-dimensional, e.g. 8-dimensional, 10-dimensional or 12-dimensional, especially 10-dimensional, data representation, whereby the multi-dimensional data representation is a representation of an individual fluid-bearing structure; applying the transformed multi-dimensional data representation to the defined classification model, whereby the local arrangements of the fourth group of local arrangements that are classified as belonging to leak cluster constitute the fifth group of local arrangements. The local arrangements in the fifth group of local arrangements are considered to be arranged at leaking fluid-bearing structures.

The inventive method can make use of the inventive system. Each feature, detail and embodiment described in the context of the inventive system can be fully or partly incorporated into the inventive method and vice versa.

According to another aspect of this invention there is a computer program with source code for executing the steps of the inventive method, the computer program executed in a computer or calculation means.

The present invention and its further advantages will be explained in more detail in connection with the accompanying drawings depicting embodiments of this invention. Note that the present invention is not limited to the depicted embodiments. Note also that identical elements within the drawings get identified with identical reference signs so that identical elements get a designated reference sign only once as a matter of principle. Note also that features present in one embodiment generally can be part of any other embodiment depicted in the drawings.
- Figure 1: is a flow chart of the inventive method,
- Figure 2: is a detailed flow chart of the step of building a first filter within the framework of the inventive method,
- Figure 3: is a detailed flow chart of the step of applying the first filter within the framework of the inventive method,
- Figure 4: is a detailed flow chart of the step of building a second filter within the framework of the inventive method,
- Figure 5: is a detailed flow chart of the step of applying the second filter within the frame-work of the inventive method.

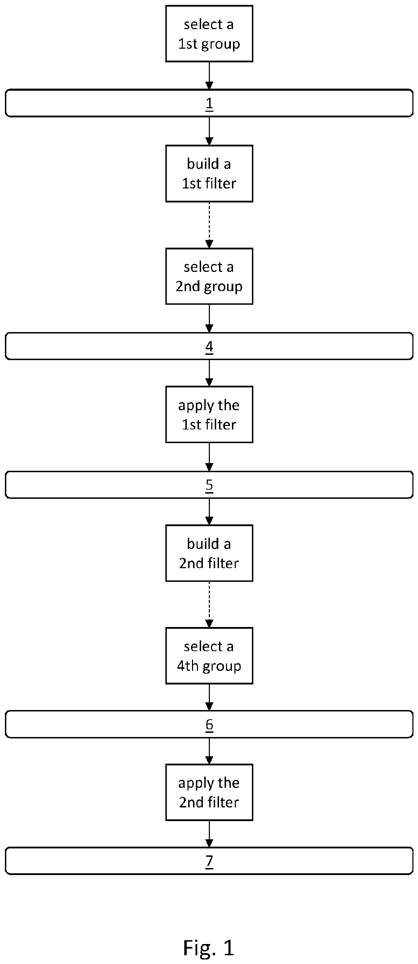

Figure 1 represents the inventive method according to one embodiment. It is a depiction in form of a flow chart.

To begin with, a first group of local arrangements 1 is selected by picking every local arrangement that is available. Each local arrangement is arranged at a fluid-bearing structure and each local arrangement comprises at least a valve for closing and opening a fluid line of the fluid-bearing structure in order to create a hydrostatic subnetwork within the fluid-bearing structure, a pressure sensor 2 for measuring the fluid pressure in the created hydrostatic subnetwork and a processing unit 3. Then a first filter is built by building a threshold model based on statistical features collected from local arrangements of the selected first group of local arrangements 1.

A second group of local arrangements 4 is selected by manual screening and the built first filter is applied to each of the local arrangements of the selected second group of local arrangements 4. The application of the first filter yields a third group of local arrangements 5 that is a subgroup of the second group of local arrangements 4. Next a second filter is built by building a multi-dimensional latent space model based on multiple pressure differences collected from local arrangements of the third group of local arrangements 5.

A fourth group of local arrangements 6 is selected by manual screening and the built second filter is applied to each of the local arrangements of the selected fourth group of local arrangements 6. The application of the second filter yields a fifth group of local arrangements 7 that is a subgroup of the fourth group of local arrangements 6.

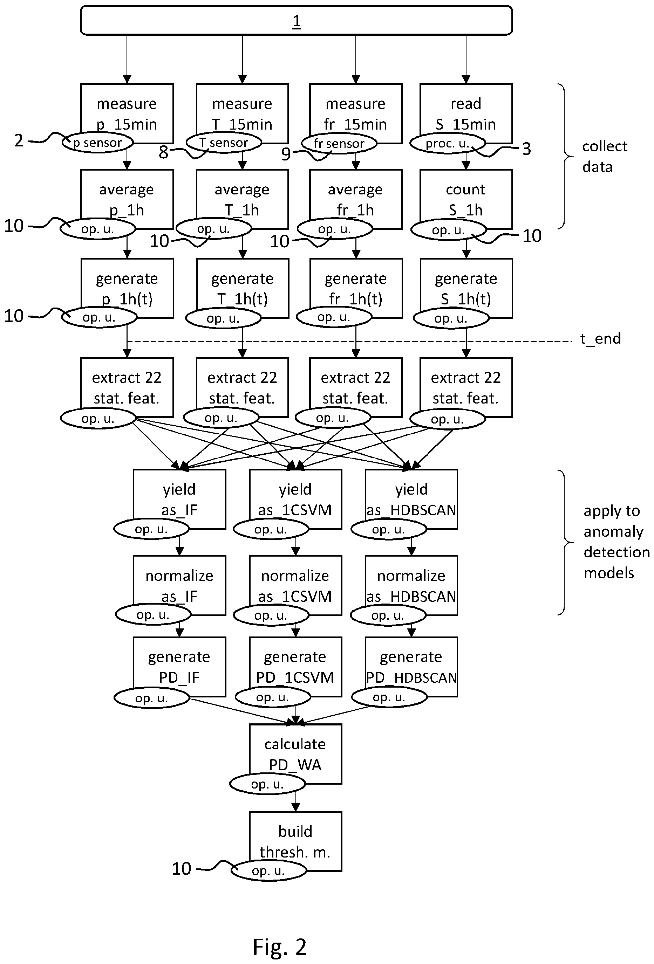

Figure 2 represents the inventive method according to one embodiment with details regarding the step of building the first filter. It is a depiction in form of a flow chart.

In the first substep data is collected periodically every 15 minutes from each local arrangement of the selected first group of local arrangements 1. The data comprises sensor data such as fluid pressure p_15min, fluid temperature T_15min and fluid flow rate fr_15min as well as status data such as binary status S_15min that is indicative of a possible fluid leakage. The fluid pressure p_15min is measured by the pressure sensor 2 of the local arrangement, the fluid temperature T_15min is measured by the temperature sensor 8 of the local arrangement and fluid flow rate fr_15min is measured by the flow rate sensor 9 of the local arrangement. The binary status S_15min is read by the processing unit 3 of the local arrangement. The collected sensor data as a whole is indicative of the condition of the fluid-bearing structures at which the local arrangements of the first group of local arrangements 1 are arranged.

Four consecutive data points of each of the collected data are then averaged by an operating unit 10 in order to yield data representing 60 minutes or one hour, respectively, namely p_1h, T_1h and fr_1h as well as S_1h.

Collecting the data periodically every 15 minutes and then averaging four of those consecutively collected data points in order to yield data representing one hour is steadily repeated. For each data, i.e. averaged fluid pressure p_1h, averaged fluid temperature T_1h and averaged fluid flow rate fr_1h as well as averaged binary status S_1h, a designated time series is initialized and every averaged data point is appended to its designated time series. This way a time series for each of the collected data is generated. The time series of consecutive averaged fluid pressure measurements p_1h(t), the time series of consecutive averaged fluid temperature measurements T_1h(t) and the time series of consecutive averaged fluid flow rate measurements fr_1h(t) as well as the time series of consecutive averaged binary status S_1h(t) increase in length as time goes on. After a predefined period of time t_end, e.g. six weeks, the time series get concluded. The above described substeps may be repeated until six more weeks and so forth in order to generate more time series.

In another substep 22 statistical features are extracted from each of the four time series by the operating unit. This leads to a total amount of 88 statistical features. The 88 statistical features then get applied to the three anomaly detection models Isolation Forest (IF), One-class Support Vector Machine (1CSVM) and Hierarchical Density-based Spatial Clustering of Applications with Noise (HDBSCAN). The application of the extracted 88 statistical features to the anomaly detection model Isolation Forest yields the anomaly score as_IF. The application of the extracted 88 statistical features to the anomaly detection model One-class Support Vector Machine yields the anomaly score as_1CSVM. The application of the extracted 88 statistical features to the anomaly detection model Hierarchical Density-based Spatial Clustering of Applications with Noise yields the anomaly score as_HDBSCAN. The anomaly scores as_IF, as_1CSVM and as_HDBSCAN are scalar values. The anomaly scores as_IF, as_1CSVM and as_HDBSCAN get normalized so that each anomaly score is a scalar value in the range between 0 and 1. A normalized anomaly score of 0 stands for no anomaly at all, while a normalized anomaly score of 1 stands for a confirmed anomaly.

At this point, the operating unit determined three normalized anomaly scores, namely as_IF, as_1CSVM and as_HDBSCAN, for each local arrangement of the first group of local arrangements 1, whereby each of those normalized anomaly scores is a distinct, scalar valued representation of an anomaly of the local arrangement within the time span of six weeks.

The operating unit 10 then generates a probability distribution for each of the anomaly detection models. The probability distribution PD_IF comprises the normalized anomaly score as_IF of every local arrangement of the first group of local arrangements 1 in a numerically assorted manner. The probability distribution PD_1CSVM comprises the normalized anomaly score as_1CSVM of every local arrangement of the first group of local arrangements 1 in a numerically assorted manner. The probability distribution PD_HDBSCAN comprises the normalized anomaly score as_HDBSCAN of every local arrangement of the first group of local arrangements 1 in a numerically assorted manner. The probability distributions PD_IF, PD_1CSVM and PD_HDBSCAN then get consolidated by calculating a weighted averaged probability distribution PD_WA, which comprises the normalized, weighted anomaly score of every local arrangement.

Finally, the anomaly score threshold is calculated based on the weighted averaged probability distribution PD_WA. The anomaly score threshold is defined as the argument of 95 % of the weighted averaged probability distribution PD_WA. The anomaly score threshold is a scalar value ranging between 0 and 1, whereby the normalized, weighted anomaly score of 95 % of the local arrangements of the first group of local arrangements 1 is less than the anomaly score threshold. The determination of the anomaly score threshold is considered to be the building of the threshold model.

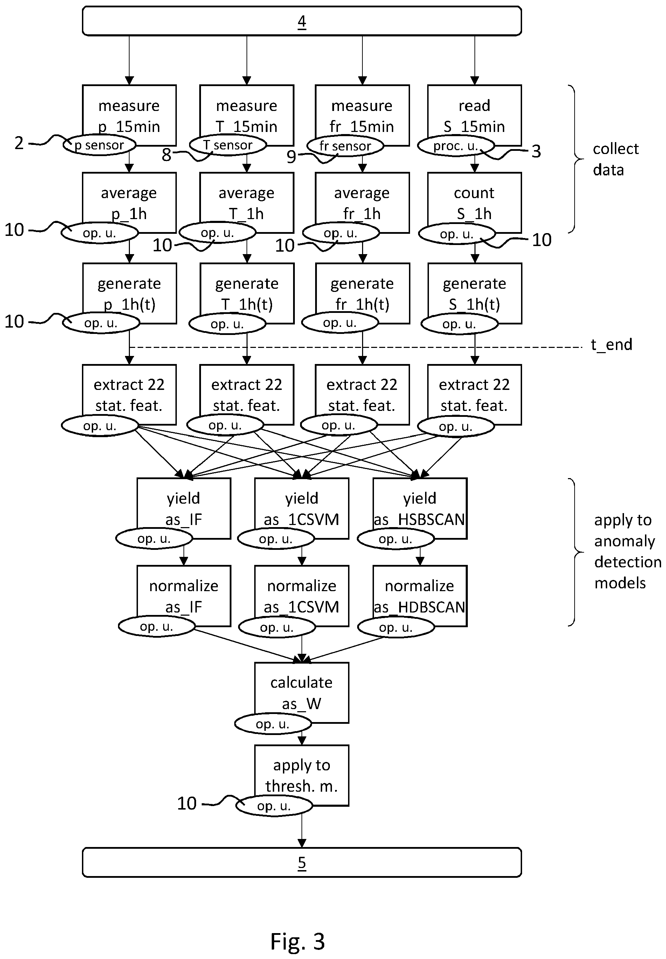

Figure 3 represents the inventive method according to one embodiment with details regarding the step of applying the first filter. It is a depiction in form of a flow chart.

Data is collected periodically every 15 minutes from each local arrangement of the selected second group of local arrangements 4 by the corresponding sensors. The sequence of substeps beginning with measuring p_15min, measuring T_15min, measuring fr_15min, reading S_15min and ending at normalizing the anomaly scores as_IF, as_1CSVM and as_HDBSCAN are performed analogously to the substeps as described in the context of Figure 2.

Based on the three normalized anomaly scores as_IF, as_1CSVM and as_HDBSCAN for each local arrangement of the second group of local arrangements 4 a weighted anomaly score as_W is calculated for each local arrangement by the operating unit 10. Then, the calculated weighted anomaly score as_W is applied to the built threshold model by the operating unit 10. To this end, the weighted anomaly score as_W of the local arrangements of the second group of local arrangements 4 are compared to the anomaly score threshold by the operating unit 10, whereby every local arrangement of the second group of local arrangements 4 with a weighted anomaly score as_W greater than or equal to the anomaly score threshold constitute the third group of local arrangements 5.

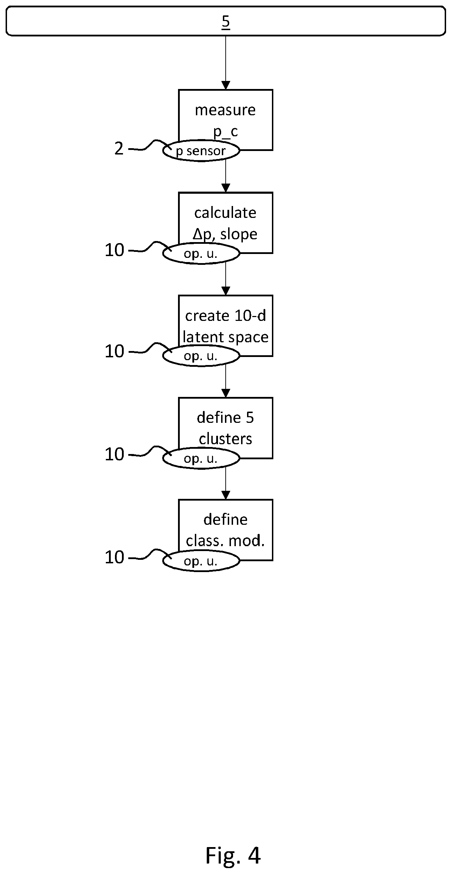

Figure 4 represents the inventive method according to one embodiment with details regarding the step of building the second filter. It is a depiction in form of a flow chart.

According to the first substep, the current fluid pressure p_c within the hydrostatic subnetwork of each of the local arrangements of the third group of local arrangements 5 is measured by the pressure sensor 2 for as long as a measurement duration. The third group of local arrangements 5 is a subgroup of the second group of local arrangements 4.

Then, the fluid pressure difference Δp between the currently measured fluid pressure p_c and a formerly measured fluid pressure p_f in the hydrostatic subnetwork of each of the local arrangements of the third group of local arrangements 5 as well as the slope are calculated by the operating unit 10.

The operating unit 10 then creates a 10-dimensional latent space based on multiple calculated fluid pressure differences Δp as well as multiple slopes, defines five clusters of the local arrangements of the third group of local arrangements 5 and defines a classification model based on the five clusters and the 10-dimensional latent space.

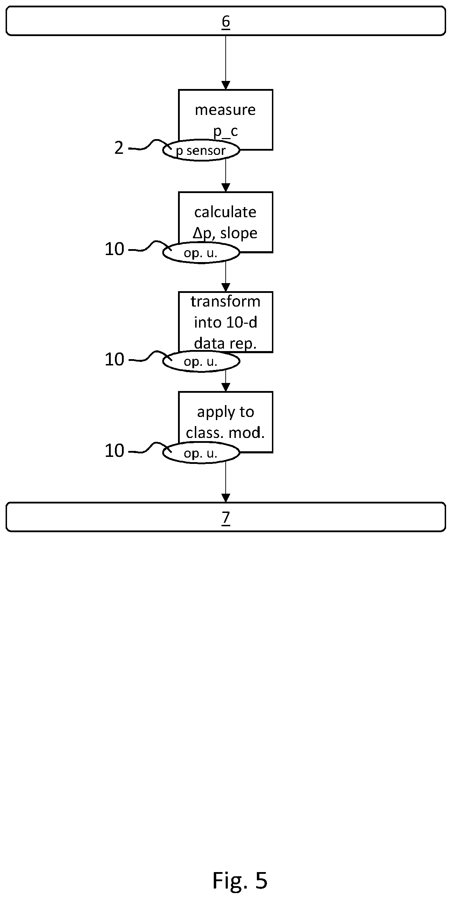

Figure 5 represents the inventive method according to one embodiment with details regarding the step of applying the second filter. It is a depiction in form of a flow chart.

A fourth group of local arrangements 6 is selected by manual screening. Each local arrangement is arranged at a fluid-bearing structure and each local arrangement comprises at least a valve for closing and opening a fluid line of the fluid-bearing structure in order to create a hydrostatic subnetwork within the fluid-bearing structure, a pressure sensor 2 for measuring the fluid pressure in the created hydrostatic subnetwork and a processing unit 3.

The sequence of substeps of measuring the current fluid pressures p_c and calculating the fluid pressure differences Δp are performed analogously to the substeps as described in the context of Figure 4.

The operating unit 10 transforms multiple of the calculated fluid pressure differences Δp and the calculated slopes into a 10-dimensional data representation. The transformed 10-dimensional data representation is then applied to the defined classification model. The application of the data representation to the classification model results in one of the five defined clusters. The local arrangements of the fourth group of local arrangements 6 that are classified as belonging to the cluster labelled as the "leak cluster" constitute the fifth group of local arrangements 7.

### List of reference signs

- 1: first group of local arrangements
- 2: pressure sensor
- 3: processing unit
- 4: second group of local arrangements
- 5: third group of local arrangements
- 6: fourth group of local arrangements
- 7: fifth group of local arrangements
- 8: temperature sensor
- 9: flow rate sensor
- 10: operating unit

## Claims

1. System for detecting leakages in a fluid-bearing structure, the system comprising at least
- a local arrangement arranged at a fluid-bearing structure and comprising at least
∘ a valve for closing a fluid line of the fluid-bearing structure to create a hydrostatic subnetwork within the fluid-bearing structure,
∘ a pressure sensor (2) for measuring the fluid pressure in the hydrostatic subnetwork,
∘ a processing unit (3),
- an operating unit (10),
whereby the processing unit (3) is adapted
- to direct the valve to close itself, to direct the pressure sensor (2) to measure the fluid pressure, to transmit a measured designated value to the operating unit (10), to direct the valve to open itself,
whereby the operating unit (10) is adapted
- to receive a measured designated value from the processing unit (3), to command the processing unit (3) to direct,
- to determine a leakage likelihood and a measurement duration associated with the arranged fluid-bearing structure based on a calculated fluid pressure difference,
- to build a multi-dimensional latent space model based on multiple pressure differences between the measured fluid pressure and a predefined reference fluid pressure and based on the corresponding measurement duration of each pressure difference, to apply a clustering method to the built latent space in order to define at least two clusters, whereby the clusters represent different confidence levels regarding the detection of a leakage,
- to transform consecutive pressure measurements into a multi-dimensional data representation representing an individual fluid-bearing structure, to determine to which cluster the transformed multi-dimensional data representation belongs in order to yield the leakage confidence level of the corresponding fluid-bearing structure.

2. System according to claim 1, whereby the pressure sensor (2) is adapted to measure the fluid pressure periodically, whereby the operating unit (10) is adapted to determine the leakage likelihood (Lx) and the measurement duration by being adapted
- to check whether the pressure measurement is valid or invalid, to calculate the difference in fluid pressure between the beginning and the end of the measurement duration in case the pressure measurement is checked as valid, to assign a higher value for the leakage likelihood and to decrease the measurement duration in case the calculated fluid pressure difference is greater than a threshold value, to assign a lower value for the leakage likelihood and to increase the measurement duration in case the calculated fluid pressure difference is less than or equal to the threshold value.

3. System according to claim 2, whereby the local arrangement comprising at least a temperature sensor (8) for measuring the fluid temperature and a flow rate sensor (9) for measuring the fluid flow rate.

4. System according to claim 3, whereby the temperature sensor (8) is adapted to measure the fluid temperature periodically,
whereby the flow rate sensor (9) of each local arrangement is adapted to measure the fluid flow rate periodically,
whereby the processing unit (3) is adapted
- to calculate the fluid pressure difference between the measured fluid pressure and a predefined reference fluid pressure, to set a binary status variable indicative of a possible fluid leakage based on a comparison of the calculated fluid pressure difference and a predefined reference fluid pressure difference,
whereby the operating unit (10) is adapted
- generate a first, a second and a third normalized anomaly score based on fluid pressure measurements, fluid temperature measurements, and fluid flow rate measurements,
- to calculate a weighted averaged anomaly score based on the first, the second and the third normalized anomaly score,
- to build a threshold model based on the weighted averaged anomaly score,
- to apply the calculated weighted averaged anomaly score to the built threshold model,
- to label each local arrangement either as "low micro leakage probability" or "high micro leakage probability" based on the result of the application of the calculated weighted averaged anomaly score to the built threshold model.

5. System according to claim 4, whereby the operating unit (10) is adapted to generate the first, the second and the third normalized anomaly score based on fluid pressure measurements, fluid temperature measurements, and fluid flow rate measurements by being adapted
- to calculate an average value of a predefined number of fluid pressure measurements, an average value of a predefined number of fluid temperature measurements and an average value of a predefined number of fluid flow rate measurements,
- to count the number of binary status variables indicating a possible fluid leakage,
- to generate a first time series based on the averaged fluid pressure measurements, a second time series based on the averaged fluid temperature measurements, a third time series based on the averaged fluid flow rate measurements and a fourth time series based on the counted number of binary status variables indicating a possible fluid leakage,
- to extract a predefined number of statistical features of each of the first, the second, the third and the fourth time series,
- to apply the extracted statistical features to a first anomaly detection model in order to yield a first anomaly score, to a second anomaly detection model in order to yield a second anomaly score and to a third anomaly detection model in order to yield a third anomaly score,
- to normalize the first, the second and the third yielded anomaly score,
- to send the first, the second and the third normalized anomaly score to the operating unit (10).

6. System according to claim 4 or 5, whereby the operating unit (10) is adapted to build the threshold model based on the weighted averaged anomaly score by being adapted
- to generate a first, a second and a third probability distribution based on the received first, second and third normalized anomaly scores,
- to calculate a weighted averaged probability distribution based on the first, the second and the third probability distributions,
- to calculate an anomaly score threshold based on the weighted averaged probability distribution.

7. Method for detecting leakages in a fluid-bearing structure, the method using a system comprising at least
- a local arrangement arranged at a fluid-bearing structure and comprising at least
∘ a valve for closing a fluid line of the fluid-bearing structure to create a hydrostatic subnetwork within the fluid-bearing structure,
∘ a pressure sensor (2) for measuring the fluid pressure in the hydrostatic subnetwork,
∘ a processing unit (3),
- an operating unit (10),
the method comprising at least the following steps:
- selecting a first group of local arrangements (1);
- building a first filter by building a threshold model based on statistical features collected from local arrangements of the selected first group of local arrangements (1);
- selecting a second group of local arrangements (4);
- applying the first filter to each of the local arrangements of the selected second group of local arrangements (4) yielding a third group of local arrangements (5) that is a subgroup of the second group of local arrangements (4);
- building a second filter by building a multi-dimensional latent space model based on multiple pressure differences collected from local arrangements of the third group of local arrangements (5);
- selecting a fourth group of local arrangements (6);
- applying the second filter to each of the local arrangements of the selected fourth group of local arrangements (6) yielding a fifth group of local arrangements (7) that is a subgroup of the fourth group of local arrangements (6).

8. Method according to claim 7, whereby the step of building a first filter by building a threshold model based on statistical features collected from local arrangements of the selected first group of local arrangements (1) comprises at least the following substeps:
- collecting sensor data and status data from each local arrangement of the first group of local arrangements (1) indicative of the condition of the fluid-bearing structures at which the local arrangements of the first group of local arrangements (1) are arranged;
- generate time series based on the collected data of the local arrangements of the first group of local arrangements (1);
- extracting statistical features from the time series of the first group of local arrangements (1);
- applying the extracted statistical features of the first group of local arrangements (1) to multiple anomaly detection models yielding multiple anomaly scores for each of the local arrangements of the first group of local arrangements (1);
- calculating a weighted averaged probability distribution based on the multiple anomaly scores;
- building a threshold model with an anomaly score threshold, whereby the anomaly score threshold is defined based on the calculated weighted averaged probability distribution.

9. Method according to claim 8, whereby the step of applying the first filter to each of the local arrangements of the selected second group of local arrangements (4) yielding a third group of local arrangements (5) that is a subgroup of the second group of local arrangements (4) comprises at least the following substeps:
- collecting sensor data and status data from each local arrangement of the second group of local arrangements (4) indicative of the condition of the fluid-bearing structures at which the local arrangements of the second group of local arrangements (4) are arranged;
- generate time series based on the collected data of the local arrangements of the second group of local arrangements (4);
- extracting statistical features from the time series of the second group of local arrangements (4);
- applying the extracted statistical features of the second group of local arrangements (4) to multiple anomaly detection models yielding multiple anomaly scores for each of the local arrangements of the second group of local arrangements (4);
- calculating a weighted anomaly score for each of the local arrangements of the second group of local arrangements (4) based on the multiple anomaly scores;
- applying the calculated weighted anomaly score of each of the local arrangements of the second group of local arrangements (4) to the built threshold model, whereby the local arrangements of the second group of local arrangements (4) associated with a weighted anomaly score greater than or equal to the anomaly score threshold constitute the third group of local arrangements (5).

10. Method according to claim 9, whereby the step of building a second filter by building a multi-dimensional latent space model based on multiple pressure differences collected from local arrangements of the third group of local arrangements (5) comprises at least the following substeps:
- measuring the fluid pressure in the hydrostatic subnetwork of each of the local arrangements of the third group of local arrangements (5) for as long as a measurement duration, whereby this measurement constitutes the currently measured fluid pressure (p_c);
- calculating the fluid pressure difference (Δp) between the currently measured fluid pressure (p_c) and a formerly measured fluid pressure (p_f) during a previously determined measurement duration (t_mdur) in the hydrostatic subnetwork of each of the local arrangements of the third group of local arrangements (5);
- creating a multi-dimensional latent space based on multiple calculated fluid pressure differences (Δp) and calculated slopes;
- defining multiple clusters of the local arrangements of the third group of local arrangements (5);
- defining a classification model based on the multiple clusters and the multi-dimensional latent space.

11. Method according to claim 10, whereby the step of applying the second filter to each of the local arrangements of the selected fourth group of local arrangements (6) yielding a fifth group of local arrangements (7) that is a subgroup of the fourth group of local arrangements (6) comprises at least the following substeps:
- measuring the fluid pressure in the hydrostatic subnetwork of each of the local arrangements of the fourth group of local arrangements (6) for as long as a measurement duration, whereby this measurement constitutes the currently measured fluid pressure (p_c);
- calculating the fluid pressure difference (Δp) between the currently measured fluid pressure (p_c) and a formerly measured fluid pressure (p_f) in the hydrostatic subnetwork of each of the local arrangements of the fourth group of local arrangements (6);
- transforming multiple of the calculated fluid pressure differences into a multi-dimensional data representation;
- applying the transformed multi-dimensional data representation to the defined classification model, whereby the local arrangements of the fourth group of local arrangements (6) classified as belonging to leak cluster constitute the fifth group of local arrangements (7);

12. Computer program with source code for executing the steps of the method according to claims 7-11, the computer program executed in a computer or calculation means.
